# EUROPÄISCHE PATENTSCHRIFT

(11) **EP 0 465 883 B1**
(45) Veröffentlichungstag und Bekanntmachung des Hinweises auf die Patenterteilung: **20.04.1994**
(21) Anmeldenummer: 91110053.5
(22) Anmeldetag: 19.06.1991
(51) Int. Cl.: H01R 9/26

(54) **Elektrische Anschlussklemme zum Befestigen auf einer Tragschiene**
Electric terminal for clamping onto a conductor rail
Borne de connexion pour fixation sur un rail conducteur

(30) Priorität: 09.07.1990 DE 4021816
(43) Veröffentlichungstag der Anmeldung: 15.01.1992
(73) Patentinhaber: F. Wieland Elektrische Industrie GmbH, 96052 Bamberg (DE)
(72) Erfinder: Schrauder, Franz, W-8602 Litzendorf (DE)
(74) Vertreter: Matschkur, Götz, Lindner Patent- und Rechtsanwälte

(56) Entgegenhaltungen:
- EP-A- 0 326 624
- EP-A- 0 364 745
- DE-A- 3 145 444
- FR-A- 2 410 207

## Beschreibung

Die Erfindung bezieht sich auf eine elektrische Anschlußklemme zum Befestigen auf einer Tragschiene, insbesondere Schaltanlagen-Reihenklemme, mit einem Klemmengehäuse aus elektrisch isolierendem Material und einem mit dem Klemmengehäuse verbundenen Montagefuß, wobei der Montagefuß zum Befestigen der Anschlußklemme auf der Tragschiene mit einer Mehrzahl von Befestigungsausnehmungen, nämlich mindestens zwei nach innen gerichteten Befestigungsausnehmungen für Befestigungsflansche symmetrischer Tragschienen (Hutschienen) und zwei nach außen gerichteten Befestigungsausnehmungen für Befestigungsflansche einer asymmetrischen Tragschiene (G-Schienen), versehen ist, wobei eine der nach innen gerichteten Befestigungsausnehmungen des Montagefußes an einem federbelasteten, mit einem Entriegelungsbügel versehenen ersten Schieber, und die der nach innen gerichteten Befestigungsausnehmung des ersten Schiebers benachbarte nach außen gerichtete Befestigungsausnehmung an einem gegen eine Feder gleitend nach innen verschiebbaren zweiten Schieber ausgebildet sind.

Eine sowohl baulich als auch montagemäßig recht einfache Realisierung solcher Universal-Anschlußklemmen verwendet vier nach unten gerichtete, die vier Befestigungsausnehmungen enthaltende Füße, die teilweise starr und teilweise elastisch federnd (man vergleiche hierzu beispielsweise die Deutsche Offenlegungsschrift 27 52 259) ausgebildet sind. Diese Anordnungen haben jedoch den Nachteil, daß die Befestigungskraft von der jeweils gewählten Elastizität der Füße abhängt, so daß entweder die Befestigungskraft nicht allzu hoch gewählt werden kann oder aber beim Verschwenken der Füße in Lösestellung sehr große Kräfte aufgebracht werden müssen. Entsprechend das gleiche gilt dann auch beim Aufsetzen, da in diesem Fall die Füße mit Hilfe der abgleitenden Schrägen in Löserichtung aufgefedert werden müssen.

Zur Vermeidung dieser Schwierigkeiten ist in der Patentschrift DE 31 45 444 C2 bereits eine elektrische Anschlußklemme der eingangs genannten Art vorgeschlagen worden, bei der einige der Befestigungsausnehmungen an Schiebern befestigt sind, die in die Lösestellung aufschiebbar sind, wodurch die Haltekraft auf den Schienen von der Federkraft, gegen die die Schieber in die Lösestellung verschoben werden, völlig entkoppelt sind. Diese bekannte Anschlußklemme hat jedoch den Nachteil, daß sie notgedrungen unsymmetrisch auf den Tragschienen sitzt, was in vielen Anwendungsfällen unerwünscht ist. Im allgemeinen möchte man, daß die Anschlußklemmen symmetrisch auf den Tragschienen sitzen und nicht stark nach der einen oder anderen Seite überkragen.

In der europäischen Patentanmeldung mit der Veröffentlichungs-Nummer 0 326 624 ist bereits ein einen symmetrischen Sitz auf der Schiene bewirkender Montagefuß für Reihenklemmen mit zwei gegenläufig verschiebbaren Schiebern vorgeschlagen worden, der allerdings nur zur Halterung auf sog. Hutschienen geeignet ist und somit keinen Universalfuß darstellt, der auch für G-Schienen geeignet wäre.

Der Erfindung liegt daher die Aufgabe zugrunde, eine elektrische Anschlußklemme der eingangs genannten Art so auszugestalten, daß ihr Universalfuß ein symmetrisches Aufsetzen auf alle genormten Tragschienentypen ermöglicht.

Zur Lösung dieser Aufgabe ist erfindungsgemäß vorgesehen, daß die nach außen gerichteten Befestigungsausnehmungen zwischen den nach innen gerichteten Befestigungsausnehmungen liegen, daß die nach außen gerichtete Befestigungsausnehmung des zweiten Schiebers dem tieferliegenden Befestigungsflansch einer G-Schiene zugeordnet ist und daß die zweite nach außen gerichtete Befestigungsausnehmung am inneren Ende des ersten Schiebers angeordnet ist.

Die von anderen Typen von Montagefüßen (z.B. EP-A-0 364 745) bekannte Anordnung der nach außen gerichteten Befestigungsausnehmungen zwischen den nach innen gerichteten Befestigungsausnehmungen ermöglicht eine Ausbildung der Art, daß die Anschlußklemmen symmetrisch auf die Tragschienen aufgesetzt werden, bringt aber auf der anderen Seite die Schwierigkeit mit sich, daß es dann problematisch wird, die Befestigungsausnehmungen so anzuordnen, daß ihre Tragteile nicht an den Befestigungsflanschen der Tragschienen anstoßen. Insbesondere gilt dies für das Aufsetzen auf die sog. Cenelec-Schiene, bei der die Befestigungsflansche der Tragschiene sehr breit ausgebildet sind, so daß sie zwischen die beiden benachbarten einmal nach innen und einmal nach außen gerichteten Befestigungsausnehmungen der beiden Schieber nicht passen. Diese Schwierigkeit wird aber bei der erfindungsgemäßen Lösung dadurch beseitigt, daß beim Aufsetzen auf die Hutschienen der zweite Schieber aufgrund seiner Schrägfläche vom inneren Rand des jeweiligen Befestigungsflansches zur Seite gedrückt wird und somit ein genügend großer Aufnahmeraum für breite Befestigungsflansche entsteht. Durch die Anordnung der zweiten nach außen gerichteten Befestigungsausnehmung am inneren Ende des ersten Schiebers ergibt sich dabei zusätzlich die vorteilhafte Wirkung, daß eine solche Anschlußklemme auf alle Arten von Schienen verrastend aufgesprengt werden kann und gleichwohl zum Lösen nur die Betätigung eines einzigen Schiebers erforderlich ist.

In weiterer Ausgestaltung der Erfindung hat es sich als besonders zweckmäßig erwiesen, die beiden Schieber gleitend aneinanderzuführen und durch eine Druckfeder gegeneinander in Richtung ihrer Arretierstellungen zu verspannen. Durch diese an sich bereits bekannte Ausbildung benötigt man lediglich eine Druckfeder, um für beide Schieber, von denen nur einer einen Betätigungsbügel aufweist, die notwendige Vorspannung in die Arretierstellung zu erreichen.

Weitere Vorteile, Vorteilhafte Merkmale und Einzelheiten der Erfindung ergeben sich aus der nachfolgenden Beschreibung eines Ausführungsbeispiels sowie anhand der Zeichnung. Dabei zeigen:

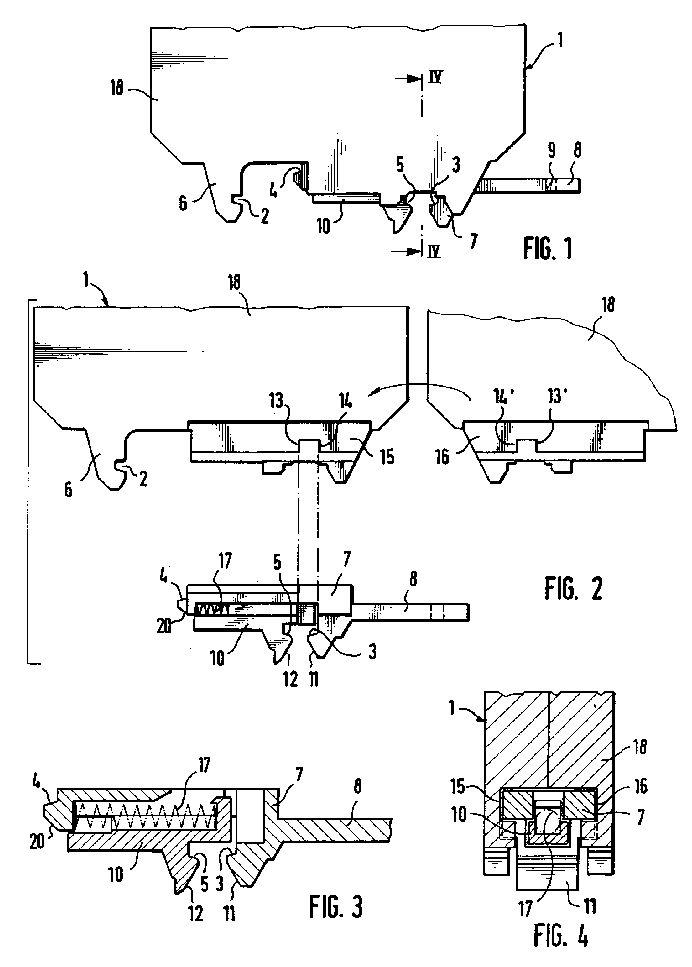

- Fig. 1: eine Teilansicht einer elektrischen Anschlußklemme mit einem erfindungsgemäßen Universalmontagefuß,
- Fig. 2: eine Explosionsdarstellung des Montagefuß-Abschnitts der Klemme nach Fig. 1,
- Fig. 3: einen Längsschnitt durch die beiden aneinandergeführten Schieber,
- Fig. 4: einen Schnitt längs der Linie IV-IV in Fig. 1,
- Fig. 5: eine Ansicht der erfindungsgemäßen Klemme in der Montagestellung auf einer Hutschiene nach der DIN-Norm EN 50022-35x7,5,
- Fig. 6: eine Ansicht der Montagestellung auf einer Cenelec-Schiene, und
- Fig. 7: eine Ansicht der Montagestellung einer erfindungsgemäßen Anschlußklemme auf einer G-Schiene.

Der Montagefuß der in den Figuren gezeigten Anschlußklemme 1 umfaßt zwei nach innen gerichtete Befestigungsausnehmungen 2 und 3 und zwei zwischen ihnen liegende nach außen gerichtete Befestigungsausnehmungen 4 und 5. Während die nach innen gerichtete Befestigungsausnehmung 2 an einem starren Fuß 6 angeordnet ist, sind die anderen Befestigungsausnehmungen an beweglichen Schiebern angeordnet, und zwar einem ersten Schieber 7, der die Befestigungsausnehmungen 3 und 4 trägt und mit einem Entriegelungsbügel 8 mit einer Schraubendreherausnehmung 9 versehen ist, sowie einem gleitend am ersten Schieber geführten zweiten Schieber 10, der die Befestigungsausnehmung 5 trägt. Den Befestigungsausnehmungen 3 und 5 sind Auflaufschrägflächen 11 und 12 vorgeschaltet, so daß beim Aufsetzen einer derartigen Anschlußklemme auf eine Schiene die Schieber jeweils zwangsweise durch die Befestigungsflanschränder, die an diesen Auflaufschrägflächen abgleiten, in die Öffnungsstellung verschoben werden und anschließend in die Arretierstellung wieder einfedern können. Die Vorspannung der Schieber 7 und 10 in die Arretierstellung, bei der die Schieber an den Kanten 13 bzw. 14 eines Anschlags der Klemmengehäuseführung 15 bzw. 16 anliegen, wird durch eine Druckfeder 17 erreicht. Im gezeigten Ausführungsbeispiel ist zur leichteren Einlegbarkeit des die beiden Schieber und ihre Vorspann-Druckfeder 17 umfassenden Bauteils mit den drei beweglichen Befestigungsausnehmungen das Klemmengehäuse geteilt und mit einem Deckelteil 18 versehen, der nach dem Einlegen der Schieber aufgesetzt und in beliebiger Weise mit dem Klemmengehäuse verbunden, beispielsweise verklebt, verschweißt oder verrastet werden kann.

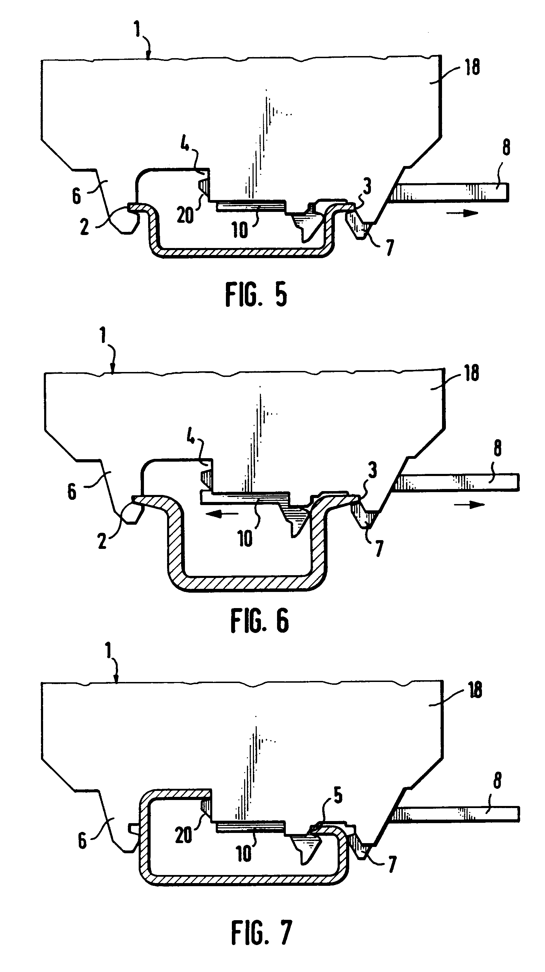

Aus den Figuren 5 bis 7 erkennt man, daß durch die erfindungsgemäße Ausbildung eine Anschlußklemme auf allen drei genormten Trägerschienentypen symmetrisch mittig aufsetzbar ist, wobei im Falle der beiden Hutschienen (Fig. 5 und 6) der zweite Schieber beim Aufsetzen (man hängt zunächst den linken Rand in die Ausnehmungen 2 der starren Füße 6 ein) mehr oder weniger weit nach innen verschoben wird und dann an der Innenwand der Tragschiene anliegt. Das Aufsetzen auf die G-Schiene gemäß Fig. 7 kann dabei, insbesondere wenn auch die Ausnehmung 4 am inneren Ende des ersten Schiebers mit einer Aufsetzschrägfläche 20 versehen ist, beliebig erfolgen, d.h. es kann sowohl zunächst auf den hohen als auch auf den niedrigen Befestigungsflansch der G-Schiene aufgesetzt und anschließend das andere Ende eingeschwenkt werden.

## Patentansprüche

1. Elektrische Anschlußklemme (1) zum Befestigen auf einer Tragschiene, insbesondere Schaltanlagen-Reihenklemme, mit einem Klemmengehäuse aus elektrisch isolierendem Material und einem mit dem Klemmengehäuse verbundenen Montagefuß, wobei der Montagefuß zum Befestigen der Anschlußklemme auf der Tragschiene mit einer Mehrzahl von Befestigungsausnehmungen (2-5), nämlich mindestens zwei nach innen gerichteten Befestigungsausnehmungen (2,3) für Befestigungsflansche symmetrischer Tragschienen (Hutschienen) und zwei nach außen gerichteten Befestigungsausnehmungen (4,5) für Befestigungsflansche einer asymmetrischen Tragschiene (G-Schienen), versehen ist, wobei eine (3) der nach innen gerichteten Befestigungsausnehmungen (2,3) des Montagefußes an einem federbelasteten, mit einem Entriegelungsbügel versehenen ersten Schieber (7), und die der nach innen gerichteten Befestigungsausnehmung des ersten Schiebers benachbarte nach außen gerichtete Befestigungsausnehmung (5) an einem gegen eine Feder gleitend nach innen verschiebbaren zweiten Schieber (10) ausgebildet sind, dadurch gekennzeichnet, daß die nach außen gerichteten Befestigungsausnehmungen (4, 5) zwischen den nach innen gerichteten Befestigungsausnehmungen (2, 3) liegen, daß die nach außen gerichtete Befestigungsausnehmung des zweiten Schiebers (10) dem tieferliegenden Befestigungsflansch einer G-Schiene zugeordnet ist und daß die zweite nach außen gerichtete Befestigungsausnehmung (4) am inneren Ende des ersten Schiebers (7) angeordnet ist.

2. Elektrische Anschlußklemme nach Anspruch 1, dadurch gekennzeichnet, daß die beiden Schieber (7, 10) gleitend aneinandergeführt und durch eine Druckfeder (17) gegeneinander in Richtung ihrer Arretierstellungen verspannt sind.

## Claims

1. Electric terminal (1) for fixing to a conductor rail, in particular switchboard series terminal, having a terminal housing composed of electrically insulating material and a mounting base connected to the terminal housing, the mounting base being provided with a plurality of fixing recesses (2-5) for fixing the terminal to the conductor rail, in particular at least two inward-facing fixing recesses (2, 3) for fixing-flanges of symmetrical conductor rails (top-hat rails) and two outward-facing fixing recesses (4, 5) for fixing-flanges of an asymmetrical conductor rail (G-rails), wherein one (3) of the inward-facing fixing recesses (2, 3) of the mounting base is formed on a spring-loaded slide (7) provided with an unlocking clip and the outward-facing fixing recess (5) adjacent to the inward-facing fixing recess of the first slide is formed on a second slide (10) that slides inwards against a spring, characterised in that the outward-facing fixing recesses (4, 5) lie between the inward-facing fixing recesses (2, 3), in that the outward-facing fixing recess of the second slide (10) is associated with the lower fixing flange of a G-rail, and in that the second outward-facing fixing recess (4) is disposed at the inner end of the first slide (7).

2. Electric terminal according to claim 1, characterised in that the two slides (7, 10) are guided slidingly against one another and are biased against one another in the direction of their stop positions by a pressure spring (17).

## Revendications

1. Borne de raccordement électrique (1) pour la fixation sur un rail de support, notamment barrette à bornes pour installation de coupure, comportant un boîtier de borne réalisé en un matériau électriquement isolant et un pied de montage relié au boîtier de borne, et dans laquelle, pour la fixation de la borne de raccordement au rail de support, le pied de montage est pourvu d'une multiplicité d'évidements de fixation (2 à 5), à savoir au moins deux évidements de fixation (2,3) tournés vers l'intérieur, pour des brides de fixation de rails de support symétriques (rails à profilé en chapeau) et deux évidements de fixation (4,5) tournés vers l'extérieur, pour des brides de fixation d'un rails en support dissymétrique (rails en G), l'un (3) des évidements de fixation (2,3), tournés vers l'intérieur, du pied de montage est formé dans un premier curseur (7) chargé par un ressort et équipé d'un étrier de déverrouillage, et l'évidement de fixation (5), qui est tourné vers l'extérieur et est voisin de l'évidement de fixation, tourné vers l'intérieur, du premier curseur, est réalisé dans un second curseur (10) qui peut être déplacé par glissement vers l'intérieur à l'encontre d'un ressort, caractérisée en ce que les évidements de fixation (4,5), tournés vers l'extérieur, sont situés entre les évidements de fixation (2,3) tournés vers l'intérieur, que l'évidement de fixation, tourné vers l'extérieur, du second curseur (10) est associé à la bride de fixation plus profonde d'un rail en G et que le second évidement de fixation (4), tourné vers l'extérieur, est ménagé dans l'extrémité intérieure du premier curseur (7).

2. Borne de raccordement électrique selon la revendication 1, caractérisée en ce que les deux curseurs (7,10) sont guidés de manière à pouvoir glisser l'un contre l'autre et sont serrés l'un contre l'autre en direction de leur positions de blocage, par un ressort de pression (17).
